# EUROPÄISCHE PATENTSCHRIFT

(11) **EP 0 886 364 B1**
(45) Veröffentlichungstag und Bekanntmachung des Hinweises auf die Patenterteilung: **19.09.2001**
(21) Anmeldenummer: 98111178.4
(22) Anmeldetag: 18.06.1998
(51) Int. Cl.: H02K 1/28, H02K 5/167, H02K 7/075

(54) **Rotor für eine elektrische Machine**
Rotor for an electrical machine
Rotor pour une machine électrique

(30) Priorität: 19.06.1997 DE 19726016
(43) Veröffentlichungstag der Anmeldung: 23.12.1998
(73) Patentinhaber: Continental Teves AG & Co. oHG, 60488 Frankfurt (DE)
(72) Erfinder: Reinartz, Hans-Dieter, 60439 Frankfurt/Main (DE); Dinkel, Dieter, 65817 Eppstein/Ts (DE)
(74) Vertreter: Portwich, Peter

(56) Entgegenhaltungen:
- EP-A- 0 600 270
- US-A- 5 196 747
- PATENT ABSTRACTS OF JAPAN vol. 009, no. 159 (E-326), 4.Juli 1985 & JP 60 035947 A (IGARASHI DENKI SEISAKUSHO:KK), 23.Februar 1985,

## Beschreibung

Die Erfindung betrifft einen Rotor für eine elektrische Maschine mit den Merkmalen des Oberbegriffs des Patentanspruches 1.

Es sind bereits Rotoren für Kommutatormotoren bekannt, welche eine Motorwelle sowie einen auf der Motorwelle befestigten Halter aus mehreren Lamellenelementen mit an dem Halter angeordneten elektrischen Wicklungen aufweisen. Die Wicklungen werden mit Hilfe von Kohlebürsten und eines Kommutators mit elektrischem Strom versorgt. Die Wicklungen wirken mit Magneten eines Stators zusammen.

Zur Herstellung der Motorwelle wird eine Stange aus zylindrischem Vollwerkstoff mit definierter Länge herangezogen, auf die die Lamellenelemente des Halters form- und/oder kraftschlüssig sowie drehfest aufgepreßt werden. Für eine sichere, drehfeste Befestigung ist es notwendig, den Kontaktbereich, das heißt die Oberfläche der Motorwelle ur.d die Bohrung in jedem Lamellenelement auf ein bestimmtes Maß zu bringen. Die Wellenoberfläche wird meist geschliffen. Die Anzahl der notwendigen Fertigungsschritte und insbesondere der notwendige Materialeinsatz wird als nachteilig angesehen.

Aufgabe der vorliegenden Erfindung ist es daher, einen Rotor für eine elektrische Maschine bereitzustellen, welcher sich einfach herstellen läßt und darüber hinaus einen geringen Materialiensatz erfordert.

Diese Aufgabe wird mit den kennzeichnenden Merkmalen des Patentanspruches 1 dadurch gelöst, daß die Motorwelle Rohrform aufweist und aus Teilen bestimmter Lamellenelemente des Halters besteht. Die Erfindung erlaubt also in vorteilhafter Weise, die Motorwelle durch Teile bestimmter Lamellenelemente des Halters zu ersetzen. Diese Maßnahme führt zu einer starken Materialersparnis und zu einem wesentlich geringeren Gewicht des Rotors. Ferner ergibt sich die Möglichkeit, die Motorwelle quasi zusammen mit bestimmten Lamellenelementen in einem Arbeitsgang, mit Hilfe von umformtechnischen Fertigungsverfahren herzustellen.

Weiterbildungen und vorteilhafte Ausgestaltungen der Erfindung gehen aus Unteransprüchen zusammen mit der Beschreibung und der Zeichnung hervor. In jede der Figuren sind jeweils zwei Varinanten der Erfindung eingezeichnet. Im einzelnen zeigen:
- Fig. 1: Längsschnitt durch eine erste und eine zweite Variante eines Elektromotors mit einem erfindungsgemäßen Rotor;
- Fig. 2: Längsschnitt wie in Figur 1 durch zwei weitere Ausführungsformen der Erfindung mit abgewandelter Lagerung;
- Fig. 3: Längsschnitt wie in Figur 2 durch zwei zusätzliche, abgewandelte, Ausführungsformen.

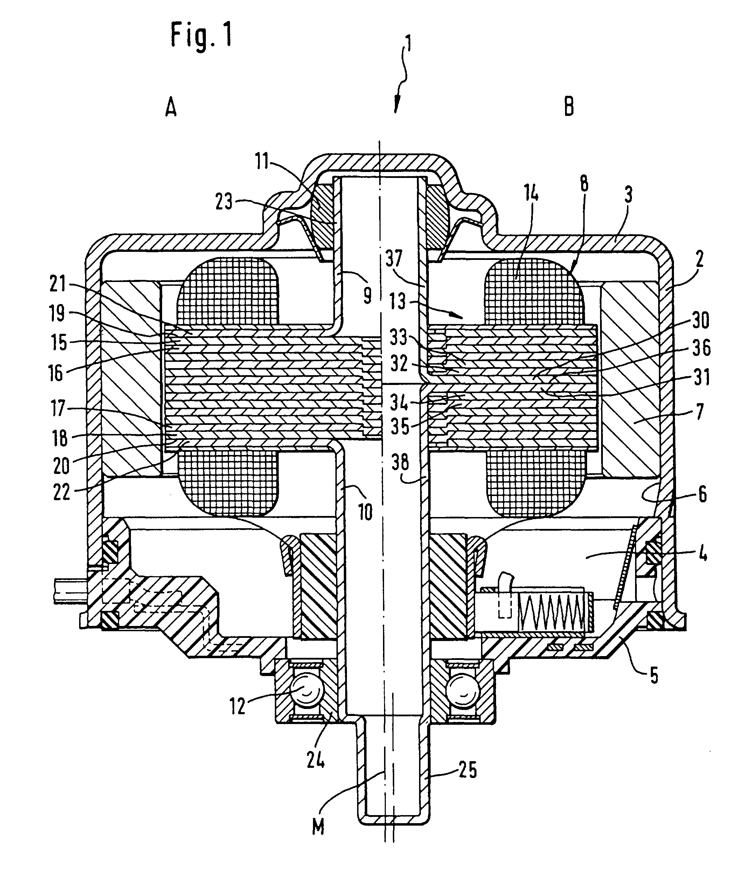

Jede der Figuren 1, 2 und 3 zeigt zwei Ausführungsformen der Erfindung, welche jeweils bis zu der Mittelachse M gezeichnet sind. Es versteht sich, daß der Elektromotor 1 der vorgestellten Alternativen in natura jeweils symmetrisch zu seiner Mittelachse M ausgeführt ist. In dem folgenden wird auf die in Fig. 1 mit A gekennzeichnete Alternative der Erfindung Bezug genommen. Jeder Elektromotor 1 verfügt als Stator über ein topfförmiges Motorengehäuse 2 mit einem nach außen geschlossenen Boden 3 und über eine abtriebsseitige Öffnung 4, welche mittels einem Lagerschild 5 oder einem anderen Bauteil verschlossen ist. An einer Innenseite 6 des Motorengehäuses 2 sind Permanentmagneten 7 befestigt, welche mit dem Rotor 8 zusammenwirken. Der Rotor 8 umfaßt im wesentlichen einen bodenseitigen Motorwellenstutzen 9 und einen abtriebsseitigen Motorwellenstutzen 10, der mit zugehörigen Lagern 11,12 an dem Boden 3 bzw. an einem Lagerschild 5 oder aber einem anderen Bauteil, beispielsweise einem Gehäuse einer angeflanschten Arbeitsmaschine, gelagert ist. Folglich sind die Motorwellenstutzen 9,10 drehbar gegenüber dem Motorengehäuse 2 angeordnet. Fluchtend zu den Permanentmagneten 7 weist der Rotor 8 einen Halter 13 für wechselweise bestrombare Wicklungen 14 auf. Nachstehend werder: die Besonderheiten der Ausführungsform A beschrieben. Der Ealter 13 besteht dort aus mehreren, parallel zueinander angeordneten, Lamellenelementen 15,16,17,18 von beliebiger Anzahl und mit scheibenförmigem Grundkörper, welche berührend aufeinander geschichtet sind. Die einzelnen Lamellenelemente 15,16,17,18 sind vorzugsweise derart aneinander befestigt, daß sie ein kompaktes, separat handhabbares Paket, das sogenannte Blechpaket, bilden. Das Bleckpaket wird beispielsweise durch eine gestanzte Verklinkung, einen durchgehenden Niet oder eine Kunststoffumspritzung zusammengehalten. An der Stirnseite 19, 20 des jeweils letzten, axial äußeren Lamellenelementes 15,18 liegt jeweils eine Endlamelle 21,22. Jede Endlamelle 21,22 liegt mit dem Lamellenkörper bündig auf dem benachbarten Lamellenelement 15,18 auf und geht einstückig in den jeweiligen Motorwellenendstutzen 9 bzw. 10 über. Die beiden Endlamellen 21,22 mit den Stutzen 9,10 sind beispielsweise mit Hilfe von Tiefzieh-Operationen aus Blech hergestellt und jeder Motorwellenstutzen 9,10 erstreckt sich rechtwinklig zu der Hauptebene der Lamellenelemente 15 bis 18. Wie die Figur zeigt, ist der Grundkörper jeder Endlamelle nach axial außen mit einer Abdeckung versehen. Das Ende 23 des Motorwellenstutzens 9 weist an seinem Außenumfang eine Reibfläche für das Kalottenlager 11 auf und an dem abtriebsseitigen Motorwellenstutzen 10 ist ein Lagerinnenring 24 des abtriebsseitigen Wälzlagers 12 aufgepreßt. Weil als Rohstoff für die Endlamellen 21,22 glattes Streifenblech bzw. Blechplatinen dienen, kann eine Bearbeitung der Oberfläche der durch diese Elemente gebildeten Motorwellenstutzen 9,10 entfallen. Die einstückig an den Endlamellen 21,22 angeordneten Wellenstutzen 9,10 ersetzen gleichsam eine herkömmliche volle Motorwelle. Mit dieser Maßnahme wird ferner eine einfache, umformtechnische Herstellung der Bauteile für den Rotor mit wenigen Fertigungsschritten ermöglicht.

Wesentlich für die Herstellung des Rotors 8 ist es, daß ein Paket mit Lamellenelementen 15 bis 18 vorliegt, und an den jeweiligen Stirnseiten 19,20 jeweils eine Endlamelle 21,22 mit einem bodenseitigen und einem abtriebsseitigen Motorwellenstutzen 9,10 befestigt wird, welcher der Lagerung des gesamten Rotors 8 dient.

Es versteht sich, daß an den abtriebsseitigen Motorwellenstutzen 10 eine Exzentrizität 25 angeformt werden kann, welche beispielsweise der Betätigung von Pumpenkolben einer Hydraulikpumpe dient. Wenn der Exzenter im Rahmen der Tiefzieharbeitsgänge zur Herstellung des Motorwellenstutzens 10 mitgezogen wird, verringert dies den Gesamtherstellungsaufwand zusätzlich.

Das mit B gekennzeichnete Ausführungsbeispiel in Fig. 1 unterscheidet sich von der Ausführungsform A durch die Annordnung und Gestaltung der beiden Lamellenelemente 30,31. Der scheibenförmige Grundkörper jedes dieser beiden Lamellenelemente 30,31 befindet sich im wesentlichen im Zentrum des Halters 13, also mittig zwischen den Lamellenelementen 32 bis 35. Die beiden Grundkörper der Elemente 30,31 berühren einander entlang der Fläche 36. Nach axial außen, in Richtung auf die Bodenseite bzw. die Abtriebsseite schließen sich an die beiden Elemente 30,31 die Lamellenelemente 32 bis 35 von grundsätzlich beliebiger Anzahl an. Es bietet sich an, bodenseitig und abtriebsseitig die gleiche Anzahl an Lamellenelementen vorzusehen. Abweichungen von diesem Grundschema sind allerdings möglich und je nach Anwendungsfall sinnvoll. Die einzelnen Lamellenelemente 32-35 werden von den Motorwellenstutzen 37,38, die einstückig an die Grundkörper der Lamellenelemente 30,31 angeformt sind, getragen und radial innen untergriffen. Also trägt der Motorwellenstutzen 37 die bodenseitigen Lamellenelemente 32,33 und der Motorwellenstutzen 38 die abtriebsseitigen Lamellenelemente 34,35 und ggf. noch weitere, Lamellenelemente.

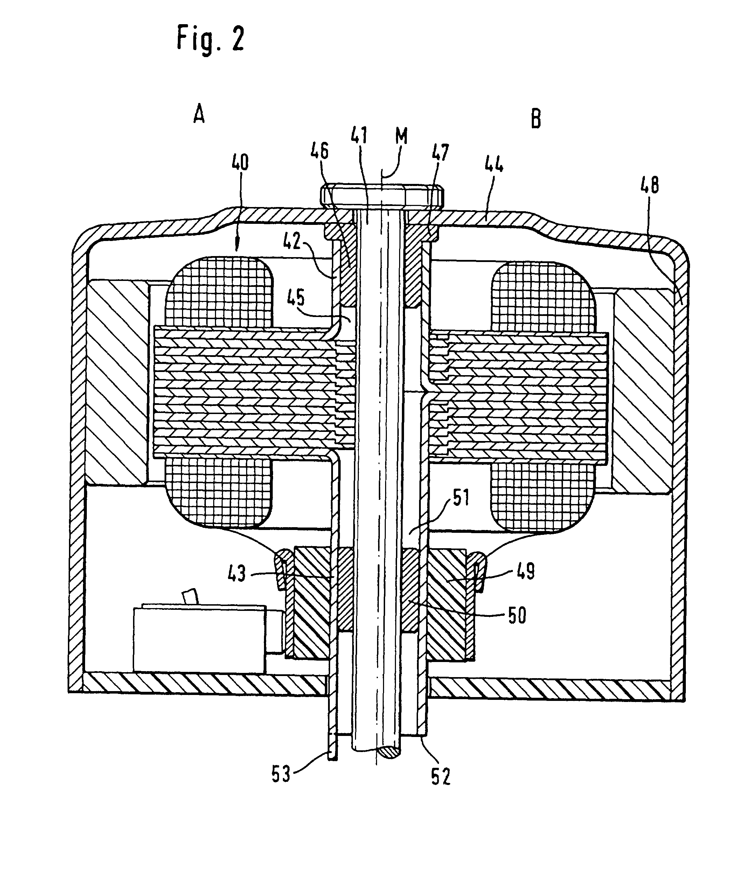

Aus Fig. 2 gehen zwei weitere Abwandlungen A und B hervor, deren Rotoraufbau im wesentlichen dem Aufbau gemäß Fig. 1 entspricht. Die Unterschiede hinsichtlich des Rotoraufbaus der Varianten A und B wurden bereits ausführlich anläßlich Fig. 1 beschrieben. Aus diesen Unterschieden erwachsen bei der Abwandlung gemäß Fig. 2 keine Konsequenzen, so daß sich die nachstehende Beschreibung auf die Unterschiede zu Fig. 1 beschränkt.

Für die beiden Varianten A und B gemäß Fig 2 ist eine besondere Lagerung des Rotors 40 mit Hilfe einer mittigen Tragachse 41 vorgesehen. Die Tragachse 41 erstreckt sich durch das Innere des Rotors 40 und lagert die beiden Motorwellenstutzen 42,43 in radialer Richtung. Die Tragachse 41 ist einerseits an dem Boden 44 und andererseits in einem Gehäuse einer angeflanschten Arbeitsmaschine, beispielsweise einem Pumpengehäuse abgestützt. An dem motorgehäuseseitigen Wellenendstutzen 42 ist in einem Zwischenraum 45 zwischen dem Motorwellenstutzen 42 und der Tragachse 41 ein Gleitlager 46 vorgesehen. Das Gleitlager 46 läuft mit seinen Gleitflächen an der Innenwand des Stutzens 42 sowie auf der Oberfläche der Tragachse 41. Zusätzlich ist das Lager 46 mit einem Bund 47 zur axialen Abstützung des Rotors 40 an dem Boden 44 des Motorengehäuses 48 versehen. Es ist darauf hinzuweisen, daß die Tragachse 41 auch dazu dient, das Motorengehäuse 48 an dem angetriebenen Aggregat zu befestigen.

Abtriebsseitig ist in Höhe eines Kommutators 49 ein Gleitlager 50 in einem zylindrischen Zwischenraum 51 zwischen Motorwellenstutzen 43 und Tragachse 41 eingebracht. An einer abtriebsseitigen Stirnfläche 52 des Motorwellenstutzens 43 ist schließlich noch mindestens ein formschlüssig wirksames Mitnehmerelement 53 zum Eingriff in ein angetriebenes Element, beispielsweise einen Exzenterring für eine Kolbenpumpe, vorgesehen. Als Mitnehmerelement 53 dient gemäß der Figur ein Nocken welcher geeignet ist, in eine entsprechend vorgesehene Ausnehmung bzw. Nut des angetriebenen Elementes einzugreifen. In gleicher Weise ist auch eine Axialverzahnung oder andere gleichartige, formschlüssig wirksame Mitnehmerelemente 53 denkbar. Folglich dient jeder Motorwellenstutzen 42,43 zugleich als Halterung für die einzelnen Lamellenelemente und als Mitnehmer für das angetriebene Element.

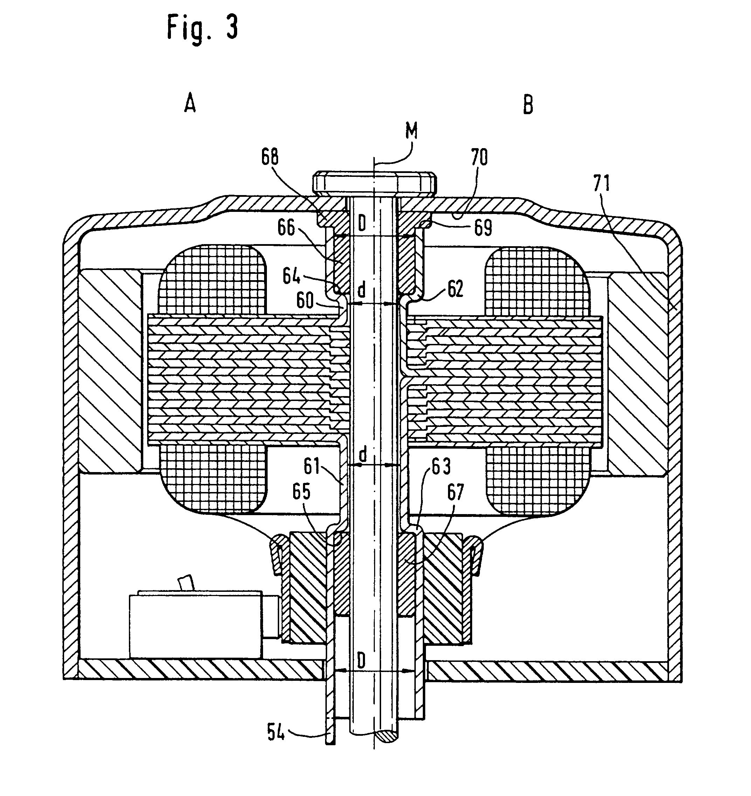

Die Ausführungsformen A und B gemäß Fig. 3 stimmen im wesentlichen mit den in Fig. 2 gezeichneten Ausführungsbeispielen überein, so daß auf deren Beschreibung Bezug genommen wird. Zusätzlich weist jeder Motorwellenstutzen 60,61 jeweils eine Stufe 62,63 auf, welche den Durchmesser d des Stutzens 60,61 auf einen größeren Durchmesser D überleitet. Schließlich ist der kleine Durchmesser d axial innen und der größere Durchmesser D axial außen angeordnet, so daß die Stufe 62,63 jeweils eine ringförmige Bodenfläche 64,65 für eine axiale Fixierung eines Gleitlagers 66,67 aufweist. Weiterhin verfügt das Gleitlager 66 über einen Bund 68, an dem die Stirnseite 69 des Motorwellenstutzens 60 axial anliegt. Der Bund 68 liegt seinerseits an dem Boden 70 des Motorengehäuses 71 an und eignet sich dadurch zur axialen Krafteinleitung.

## Patentansprüche

1. Rotor für eine elektrische Maschine, insbesondere für einen Kommutatormotor mit einer Motorwelle, die einen Halter (13) aus mehreren Lamellenelementen (15,16,17,18,21,22, 30 bis 35) für daran angeordnete elektrische Wicklungen (14) trägt, **dadurch gekennzeichnet, daß** die Motorwelle Rohrform aufweist und aus Teilen bestimmter Lamellenelemente (21,22,30,31) des Halters (13) besteht.

2. Rotor nach Anspruch 1, **dadurch gekennzeichnet, daß** mindestens ein Lamellenelement (21,22,30,31) einen axial vorstehenden Motorwellenstutzen (9,10,37,38,42,43,60,61) als Wellenteil aufweist.

3. Rotor nach einem oder mehreren der vorhergehenden Ansprüche, **dadurch gekennzeichnet, daß** der Motorwellenstutzen (9,10,37,38,42,43,60,61) rechtwinklig zu der Hauptebene der Lamellenelemente (15,16,17,18,21,22,30 bis 35) angeordnet ist.

4. Rotor nach einem oder mehreren der vorhergehenden Ansprüche, **dadurch gekennzeichnet, daß** der Motorwellenstutzen (9,10,37,38,42,43,60,61) einstückig an dem Lamellenelement (21,22,30,31) angeordnet ist.

5. Rotor nach einem oder mehreren der vorhergehenden Ansprüche, **dadurch gekennzeichnet, daß** jeder Motorwellenstutzen (9,37,42,43,60,61) mit einer Reibfläche für ein Lager (11,46,50,66,67) versehen ist.

6. Rotor nach einem oder mehreren der vorhergehenden Ansprüche, **dadurch gekennzeichnet, daß** ein abtriebsseitig vorgesehener Motorwellenstutzen (10) einen einstückig angeformten Exzenter (25) aufweist.

7. Rotor nach einem oder mehreren der vorhergehenden Ansprüche, **dadurch gekennzeichnet, daß** ein abtriebsseitig vorgesehener Motorwellenstutzen (43,61) an einer Stirnseite (52) mit einem formschlüssig wirksamen Mitnehmerelement (53,54) versehen ist.

8. Rotor nach einem oder mehreren der vorhergehenden Ansprüche, **dadurch gekennzeichnet, daß** als Mitnehmerelement (53,54) Nocken und/oder Nuten und/oder eine Axialverzahnung vorgesehen ist.

9. Rotor nach einem oder mehreren der vorhergehenden Ansprüche, **dadurch gekennzeichnet, daß** jeweils ein Lamellenelement (21,22) mit einem Stutzen (9,10) als Abschlußblech an den Stirnseiten (19,20) des Halters (13) vorgesehen ist.

10. Rotor nach einem oder mehreren der vorhergehenden Ansprüche, **dadurch gekennzeichnet, daß** der Stutzen (37,38) derart an dem Lamellenelement (30,31) angeordnet ist, daß mehrere benachbarte Lamellenelemente (32 bis 35) von diesem getragen werden.

11. Rotor nach einem oder mehreren der vorhergehenden Ansprüche, **dadurch gekennzeichnet, daß** zwei Lamellenelemente (30,31) symmetrisch zueinander angeordnet sind und mit ihren Stutzen (37,48) benachbarte Lamellenelemente (32 bis 35) radial innen untergreifen.

12. Rotor nach einem oder mehreren der vorhergehenden Ansprüche, **dadurch gekennzeichnet, daß** die beiden Lamellenelemente (30,31) unmittelbar aneinander anliegen.

13. Rotor nach einem oder mehreren der vorhergehenden Ansprüche, **dadurch gekennzeichnet, daß** zumindest ein Stutzen (60,61) eine Stufe (62,63) aufweist, die einen Wellendurchmesser d auf einen größeren Wellendurchmesser D überleitet.

14. Rotor nach einem oder mehreren der vorhergehenden Ansprüche, **dadurch gekennzeichnet, daß** der kleinere Wellendurchmesser d axial innen und der größere Wellendurchmesser D axial außen angeordnet ist, und die Stufe (62,63) eine ringförmige Bodenfläche (64,65) für eine axiale Fixierung eines Lagers (66,67) aufweist.

15. Rotor nach einem oder mehreren der vorhergehenden Ansprüche, **dadurch gekennzeichnet, daß** der Stutzen (60) mit einer Stirnseite (69) axial an einem Bund (68) des Gleitlagers (66) anliegt.

## Claims

1. Rotor for an electric machine, in particular, for a commutator motor with a motor shaft which carries a holder (13) comprised of several lamella elements (15,16,17,18, 21,22, 30 to 35) for electric coils (14) mounted thereon,
**characterized in that** the motor shaft has a tubular shape and is comprised of parts of determined lamella elements (21,22,30,31) of the holder (13).

2. Rotor as claimed in claim 1,
**characterized in that** at least one lamella element (21,22,30,31) includes an axially protruding motor shaft connecting piece (9,10,37,38,42,43,60,61) as a shaft component.

3. Rotor as claimed in any one or more of the preceding claims,
**characterized in that** the motor shaft connecting piece (9,10,37,38,42,43,60,61) is arranged at right angles to the main plane of the lamella elements (15,16,17,18,21,22, 30 to 35) .

4. Rotor as claimed in any one or more of the preceding claims,
**characterized in that** the motor shaft connecting piece (9,10,37,38,42,43,60,61) is arranged in one piece at the lamella element (21,22,30,31).

5. Rotor as claimed in any one or more of the preceding claims,
**characterized in that** each motor shaft connecting piece (9,37,42,43,60,61) has a frictional surface for a bearing (11,46,50,66,67).

6. Rotor as claimed in any one or more of the preceding claims,
**characterized in that** a motor shaft connecting piece (10) which is provided on the output end includes an eccentric (25) integrally shaped thereon.

7. Rotor as claimed in any one or more of the preceding claims,
**characterized in that** a motor shaft connecting piece (43,61) which is provided on the output end includes on one front surface (52) a form-lockingly effective entraining element (53,54).

8. Rotor as claimed in any one or more of the preceding claims,
**characterized in that** cams and/or grooves and/or an axial toothed system is provided as an entraining element (53,54).

9. Rotor as claimed in any one or more of the preceding claims,
**characterized in that** in each case one lamella element (21,22) with a connecting piece (9,10) is provided as an end shield on the front surfaces (19,20) of the holder (13).

10. Rotor as claimed in any one or more of the preceding claims,
**characterized in that** the connecting piece (37,38) is arranged on the lamella element (30,31) in such a fashion that several adjacent lamella elements (32 to 35) are carried by said.

11. Rotor as claimed in any one or more of the preceding claims,
**characterized in that** two lamella elements (30,31) are arranged symmetrically in relation to each other and backgrip with their connecting pieces (37,48) adjacent lamella elements (32 to 35) from radially inwards.

12. Rotor as claimed in any one or more of the preceding claims,
**characterized in that** the two lamella elements (30,31) abut each other directly.

13. Rotor as claimed in any one or more of the preceding claims,
**characterized in that** at least one connecting piece (60,61) includes a step (62,63) where a shaft diameter d is passed to a larger shaft diameter D.

14. Rotor as claimed in any one or more of the preceding claims,
**characterized in that** the small shaft diameter d is arranged axially inwards and the larger shaft diameter D is arranged axially outwards, and the step (62,63) has an annular bottom surface (64, 65) for an axial fixation of a bearing (66,67).

15. Rotor as claimed in any one or more of the preceding claims,
**characterized in that** the connecting piece (60) with one front surface (69) bears axially against a bead (68) of the sliding bearing (66).

## Revendications

1. Rotor pour une machine électrique, notamment pour un moteur à collecteur ayant un arbre-moteur portant un appui (13) composé de plusieurs éléments à lame (15, 16, 17, 18, 21, 22, 30-35) pour des bobines (14) électriques prévues aux derniers, **caractérisé en ce que** l'arbre-moteur est sous forme tubulaire et est formé de parties de certains éléments à lame (21, 22, 30, 31) de l'appui (13).

2. Rotor selon la revendication 1, **caractérisé en ce qu'**au moins un élément à lame (21, 22, 30, 31) comporte un manchon d'arbre-moteur (9, 10, 37, 38, 42, 43, 60, 61) axialement saillant et formant une partie d'arbre.

3. Rotor selon l'une ou plusieurs de revendications précédentes, **caractérisé en ce que** le manchon d'arbre-moteur (9, 10, 37, 38, 42, 43, 60, 61) est disposé à angles droits au plan majeur des éléments à lame (15, 16, 17, 18, 21, 22, 30-35).

4. Rotor selon l'une ou plusieurs de revendications précédentes, **caractérisé en ce que** le manchon d'arbre-moteur (9, 10, 37, 38, 42, 60, 61) est disposé de manière integrale sur l'élément à lame (21, 22, 30, 31).

5. Rotor selon l'une ou plusieurs de revendications précédentes, **caractérisé en ce que** chaque manchon d'arbre-moteur (9, 37, 42, 43, 60, 61) est pourvu d'une surface de frittement pour un palier (11, 46, 50, 66, 77).

6. Rotor selon l'une ou plusieurs de revendications précedentes, **caractérisé en ce qu'**une machine d'arbre-moteur (10) prévu à côté secondaire comporte un eccentrique (25) intégral.

7. Rotor selon l'une ou plusieurs de revendications précédentes, **caractérisé en ce qu'**un manchon d'arbre-moteur (43, 61) au front (52) est prévu d'un élément de guide (53, 54) agissant de manière commandée mécaniquement.

8. Rotor selon l'une ou plusieurs de revendications précédentes, **caractérisé en ce que** des cames et/ou des rainures et/ou une denture axiale sont prévues comme l'elément de guide (53, 54).

9. Rotor selon l'une ou plusieurs de revendications précédentes, **caractérisé en ce que** chaque fois un élément à lame (21, 22) avec un manchon (9, 10) est prévu comme plaque de fermeture aux fronts (19, 20) de l'appui (13).

10. Rotor selon l'une ou plusieurs de revendications précédentes, **caractérisé en ce que** le manchon (37, 38) est tellement disposé sur l'élément à lames (30,31) que plusieurs d'éléments à lames (32-35) voisins sont portés par le premier.

11. Rotor selon l'une ou plusieurs de revendications précédentes, **caractérisé en ce que** deux éléments à lames (30, 31) sont disposés en symétrie l'un à l'autre, et avec leurs manchons (37, 48) intérieurement saisissent de manière radiale des éléments à lames (32-35) voisins.

12. Rotor selon l'une ou plusieurs de revendications précédentes, **caractérisé en ce que** les deux éléments à lames (30, 31 ) directement joignent l'un à l'autre.

13. Rotor selon l'une ou plusieurs de revendications précédentes, **caractérisé en ce qu'**au moins un manchon (60, 61) comporte un étage (62, 63) passant un diamètre d'arbre d à un diamètre d'arbre D plus large.

14. Rotor selon l'une ou plusieurs de revendications précédentes, **caractérisé en ce que** le diamètre réduit d est disposé axialement à l'intérieur et le diamètre D plus large est disposé axialement à l'extérieur, et que l'étage (62, 63) comporte une surface au fond sous forme d'anneau pour axialement fixer un palier (66,67).

15. Rotor selon l'une ou plusieurs de revendications précédentes, **caractérisé en ce que** le manchon (60) avec un front (69) axialement joint un collet (68) du palier-glisseur (66).
